Europäisches Patentamt

(19) European Patent Office    (11) Publication number: **0 009 309**

Office européen des brevets    **B1**

(12)    **EUROPEAN PATENT SPECIFICATION**

(45) Date of publication of patent specification: **16.06.82**    (51) Int. Cl.³: **B 01 J 23/46,**
                                                                        **C 10 G 35/09, B 01 J 37/04**
(21) Application number: **79301545.4**

(22) Date of filing: **01.08.79**

(54) **Reforming catalyst of separate platinum-containing and iridium-containing particles and reforming process using same.**

(30) Priority: **16.08.78 US 934143**

(43) Date of publication of application:
**02.04.80 Bulletin 80/7**

(45) Publication of the grant of the patent:
**16.06.82 Bulletin 82/24**

(84) Designated Contracting States:
**DE NL SE**

(56) References cited:
**DE - A - 2 221 757**
**FR - A - 2 320 979**
**FR - E - 74 212**
**US - A - 3 554 902**
**US - A - 3 856 661**

(73) Proprietor: **MOBIL OIL CORPORATION**
**150 East 42nd Street**
**New York New York 10017 (US)**

(72) Inventor: **Schoennagel, Hans Juergen**
**42 Pine Knoll Drive**
**Lawrenceville New Jersey 08648 Mercer (US)**

(74) Representative: **Cooper, John Anthony et al,**
**Mobil Court 3 Clements Inn**
**London WC2A 2EB (GB)**

# Reforming catalyst of separate platinum-containing and iridium-containing particles and reforming process using same

This invention relates to a catalyst composition containing platinum and iridium, and to a process for the reforming of selected petroleum fractions in the presence of this catalyst to obtain gasoline of high octane number.

The present invention provides a catalyst composition comprising a mixture of a minor proportion of platinum on a support and a minor proportion of iridium on a separate support.

The present invention further provides a process for reforming a hydrocarbon charge which comprises contacting the hydrocarbon charge under reforming conditions with a catalyst comprising a mixture of a minor proportion of platinum on a support and a minor proportion of iridium on a separate support.

Catalysts intended for use in reforming operations wherein hydrocarbon fractions such as naphthas or gasolines or mixtures thereof are treated to improve the anti-knock characteristics thereof are well known in the petroleum industry.

It has heretofore been proposed to employ platinum metal-containing catalysts for promoting reforming. Such catalysts are necessarily characterized by a certain amount of acidity. One type of reforming catalyst which has been used commercially consists of an alumina base material having platinum metal impregnated thereon, with the acidity characteristic being contributed by a small amount of halogen incorporated in the catalyst.

In more recent years, multimetallic reforming catalysts, for example, bimetallic catalysts, have come into use. These catalysts generally contain platinum, together with one or more additional metals such as rhenium, germanium, iridium, palladium, osmium, ruthenium, rhodium, copper, silver, tin or gold deposited on a refractory support which also contains a specified amount of halogen. Representative of multimetallic reforming catalysts are those containing platinum and iridium, such as described in U.S. Patent No. 2,848,377 and more recently in U.S. Patent No. 3,953,368. The latter patent reports certain advantages when platinum and iridium are present on a refractory support as highly dispersed polymetallic clusters in which metallic atoms are separated by distances of about 2.5 to 4.0 Angstroms.

It has also heretofore been known to conduct catalytic reforming utilizing a catalyst consisting essentially of a particularly defined mixture of particles of a porous carrier impregnated with a small amount of platinum and particles of an acidic cracking component. Representative disclosures of such prior art are to be found in U.S. Patent Nos. 2,854,400, 2,854,403 and 2,854,404. Also, it has been suggested, for example, in German—A 2,627,822 to conduct reforming in the presence of a catalyst constituting a mixture of platinum on one solid carrier and rhenium on a second solid carrier.

In addition, FR—A—2,320,979 discloses a process for reforming naphtha using a catalyst containing 0.1 to 5% chlorine and comprising a mixture of 0.05 to 2% by weight of platinum and 0.05 to 2% by weight of rhenium on separate supports. It is also known (see for example U.S.—A—3,544,902 and 3,856,661) to use reforming catalysts containing platinum and iridium on the same support.

All of the above catalysts, while possessing certain advantages, suffer from inherent deficiencies in either activity, stability or sensitivity to poisons, e.g., sulfur, under severe reforming conditions. The ability of a reforming catalyst to provide a high yield of gasoline of high octane number over an extended period of time is, as will be realized, a highly desirable attribute, which has long been sought but not fully attained prior to the advent of the present invention.

In accordance with the present invention, reforming of a hydrocarbon charge such as a naphtha can be effectively carried out over an extended period of time to provide a high yield of gasoline of high octane number when the reforming is conducted in the presence of a catalyst comprising a mixture of a minor proportion of platinum on a support and a minor proportion of iridium on a separate support, iridium being the sole metal component on the refractory support. More particularly, the catalyst comprises a refractory support, from 0.1 to 2 weight percent of platinum, and from 0.1 to 2 weight percent of iridium, with the platinum and iridium being deposited on separate particles of the support. In all cases the catalyst further comprises from 0.1 to 5 weight percent of halogen.

The relative weight ratio of the separate particles containing platinum and those containing iridium is generally between 10:1 and 1:10. The dimensions of the separate particles may range from powder size, e.g., 0.01 micron up to particles of substantial size, e.g., 3000 microns. Preferably, the particle size is between about 1 and about 100 microns.

The refractory support is an inorganic oxide and usually alumina of the gamma or eta variety. The halogen component of the catalyst is present on both the particles containing platinum and those containing iridium. Halogen may be chloride, bromine or fluorine, with particular preference being accorded chlorine. Thus, preferred embodiments of the invention include catalysts comprising separate particles of alumina base containing a minor amount of chlorine, some of such particles having platinum deposited thereon and other of such particles having iridium deposited thereon, with the weight ratio of platinum to iridium being between 10:1 and 1:10 and preferably, between 5:1 and 1:5.

Reforming utilizing the described catalyst is conducted in the presence of hydrogen under reforming conditions. The latter include a temperature between 371°C and 593°C and more usually between 427°C and 538°C; a pressure within the range of from 446 to 6996 KPa and preferably between 791 and 4928 KPa and a liquid hourly space velocity of between 0.1 and 10 and preferably between 0.5 and 4. The molar ratio of hydrogen to hydrocarbon charge is generally between 0.5 and 20 and preferably between 2 and 12.

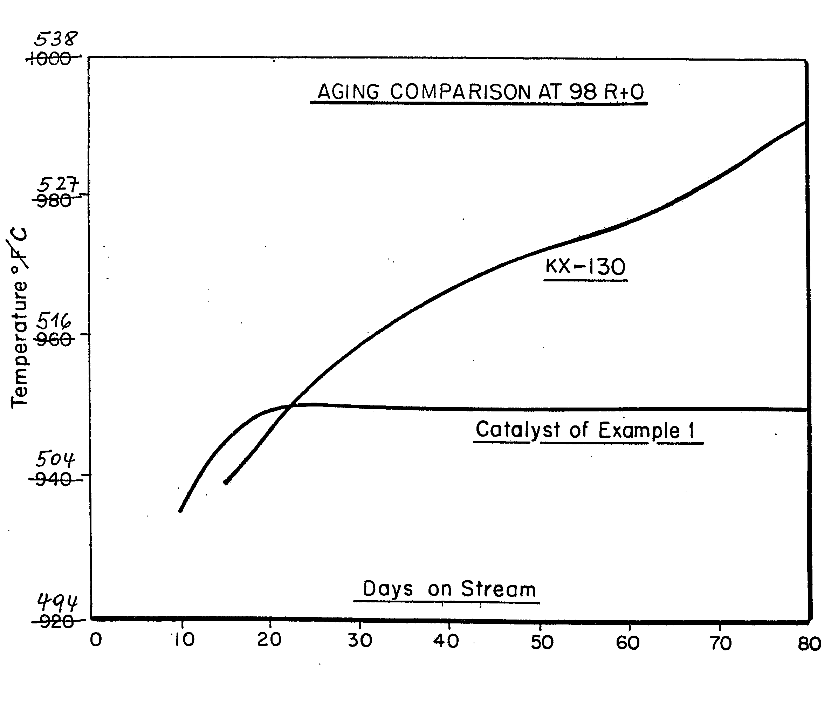

The single figure of the drawing shows the comparative reforming performance of the catalyst of the invention with a commercially available catalyst of similar chemical composition.

Following the teachings of this invention, it has been found that substantial increase in stability and activity at the same selectivity are attainable for reforming catalysts comprising a refractory support and specified minor amounts of platinum, iridium and halogen, providing the platinum and iridium components are deposited on separate particles of the support. The relative weight ratio of the particles containing platinum and those containing iridium should be between 10:1 and 1:10. The size of the separate particles may range from powder of about .01 micron to particles of about 3000 microns. Preferably, the size of the particles will be within the approximate range of 1 to 100 microns, with the size of the platinum-containing and iridium-containing particles either being of differing size within the above range or of substantially the same size.

Charge stocks undergoing reforming, using the catalyst described herein, are those conventionally employed. These include virgin naphtha, cracked naphtha, gasoline including FCC gasoline, or mixtures thereof boiling with the approximate range of 21 to 260°C and, preferably within the range of from 49 to 232°C. The charge stock is contacted in the vapor phase with the catalyst at a liquid hourly space velocity between 0.1 and 10 and preferably between 0.5 and 4. Reaction temperature is within the approximate range of 371 to 593°C and preferably between 427 and 538°C. Hydrogen may be added to the reaction zone at a rate corresponding to a mole ratio of hydrogen to hydrocarbon charge of between 0.5 and 20 and preferably between about 791 and 4928 KPa. Since the reforming process produces large quantities of hydrogen, at least a portion thereof may be conveniently employed for the introduction of hydrogen with the feed.

The refractory support of the present catalyst is a porous adsorptive material having a surface area exceeding 20 square meters per gram and preferably greater than about 100 square meters per gram. Refractory inorganic oxides are preferred supports, particularly alumina or mixtures thereof with silica. Alumina is particularly preferred and may be used in a large variety of forms including alumina, precipitate or gel, alumina monohydrate and sintered alumina. Various forms of alumina either singly or in combinations such as eta, chi, gamma, theta, delta or alpha alumina may be suitably employed as the alumina support. Preferably, the alumina is gamma alumina and/or eta alumina. The above nomenclature used in the presented specification and claims with reference to alumina phase designation is that generally employed in the United States and described in "The Aluminum Industry: Aluminum and its Production" by Edwards, Frary and Jeffries, published by McGraw-Hill (1930).

The refractory support, desirably alumina, having a particle size of at least about 0.01 micron and generally not exceeding about 3000 microns is contacted with a source of halogen. Both the particles of platinum-containing refractory support and the separate particles of iridium-containing refractory support will contain halogen.

Halogen may be added to the support, preferably alumina, in a form which will readily react therewith in order to obtain the desired results. One feasible method of adding the halogen is in the form of an acid, such as hydrogen fluoride, hydrogen bromide, hydrogen chloride and/or hydrogen iodide. Other suitable sources of halogen include volatile salts, such as ammonium fluoride and ammonium chloride. When such salts are used, the ammonium ions will be removed during subsequent heating of the catalyst. Halogen may also be added as fluorine, chlorine, bromine or iodine or by treatment in gaseous hydrogen halide. The halogen, preferably a chlorine or fluorine moiety, may be incorporated into the catalyst at any suitable stage in the catalyst manufacture. Thus, halogen may be added before, after or during incorporation of the platinum and iridium on the separate particles of refractory support. Halogen is conveniently incorporated into the catalyst when impregnating the support with halogen-containing metal compounds, such as chloroplatinic acid and chloroiridic acid. Additional amounts of halogen may be incorporated in the catalyst by contacting it with materials, such as hydrogen fluoride and hydrogen chloride, either prior to or subsequent to the metal impregnation step. Halogen may also be incorporated by contacting the catalyst with a gaseous stream containing the halogen such as chlorine or hydrogen chloride. One feasible way to halogenate the alumina is by the addition of an alkyl halide, such as tertiary butyl chloride during the reforming operation. The amount of halogen introduced into the support is that the halogen content of the overall catalyst is between 0.1 and 5 weight percent. Such halogen content may be deposited on either the platinum-containing or iridium-containing particles, and desirably is present on both particles in an approximate range which may be extended from 1:10 to 10:1 of the total halogen content. Generally, as a preferred and practical matter, the halogen content of each of the particles making up the catalyst of the invention will be approximately the same.

The platinum metal may be deposited on the support, desirably alumina, in any suitable manner. Generally, it is feasible to mix particles of support with a platinum compound such as chloroplatinic acid, platinum tetrachloride, bromoplatinic acid or the ammonium salt of chloroplatinic or bromoplatinic acid.

The iridium metal may be deposited on the support, desirably alumina, by contacting with an appropriate iridium compound such as the ammonium chloride double salt, tribromide, tetrachloride or chloroiridic acid.

The impregnated particles may then be dried in air at an elevated temperature generally not exceeding 250°C prior to introduction of the catalyst into the reforming unit. Optionally, the catalyst may be exposed to a hydrogen atmosphere to reduce a substantial portion of the platinum component to the elemental state.

A very distinct advantage of the bimetallic reforming catalyst described herein containing separate platinum/alumina and iridium/alumina particles is its ability to maintain its catalytic activity over an extended period of time. In a typical commercial reforming process, reaction temperature is increased during the course of the run to maintain a constant product octane level. Increasing the reaction temperature becomes necessary since the catalyst is continuously deactivated. Generally, the reaction temperature cannot exceed about 538°C before rapid deactivation of the catalyst is encountered. Accordingly, as the reaction temperature approaches about 538°C it is usually necessary to regenerate the catalyst. Regeneration is accomplished by burning the coke deposit from the catalyst and then treating with chlorine, HCl-oxygen mixtures or organic chloride-oxygen mixtures to rejuvenate the catalyst and thereby restore its activity and selectivity.

It is contemplated that the catalyst described hereinabove may be employed in any of the conventional types of processing equipment. Thus, the catalyst may be used in the form of pills, pellets, extrudates, spheres, granules, broken fragments or various other shapes dispersed as a fixed bed within a reaction zone. The charge stock may be passed through the catalyst bed as a liquid, vapor or mixed phase in either upward or downward flow. The catalyst may also be used in a form suitable for moving beds. In such instance, the charge stock and catalyst are contacted in a reforming zone wherein the charge stock may be passed in concurrent or countercurrent flow to the catalyst. Alternatively, a suspensoid-type process may be employed in which the catalyst is slurried in the charge stock and the resulting mixture conveyed to the reaction zone. The reforming process is generally carried out in a series of several reactors. Usually, three to five reactors are used. The catalyst of the invention may be employed in just one of the reactors, e.g., the first reactor or in several reactors or in all reactors. After reaction, the product from any of the above processes is separated from the catalyst by known techniques and conducted to distillation columns where the various desired components are obtained by fractionation.

In accordance with one embodiment of this invention, it is possible to isolate the platinum-containing portion of the catalyst from the iridium-containing portion since the same are located on separate particles. Thus, should a catalyst of the present invention become deactivated due to the loss of activity of either the platinum-containing or the iridium-containing portion of the catalyst, it is only necessary to activate that portion of the catalyst which is adversely affected rather than the whole catalyst. It is thus possible to provide separate and optimum means for ready regeneration of each of the two components. For example, the catalyst of the present invention after becoming spent, may be separated into its components of platinum-containing components and iridium-containing components by providing the respective particles with a different physical characteristic which permit their ready separation, such as a difference in particle size. The particles of differing size may be separated by flotation, air blowing, sifting or by any of the various other known means for separating physically and/or chemically different materials. The separated platinum-containing and iridium-containing particles may then be separately regenerated under conditions best suited for each.

The ability to select the amount of platinum-containing component and the amount of iridium-containing component making up the ultimate catalyst mixture has the advantage that the amount of platinum, as well as the amount of iridium contained in the catalyst, can be controlled not only by the respective concentrations of the platinum and iridium impregnating solutions used but also by the respective amounts of the platinum-containing and iridium-containing components of the catalyst. If the two-component catalyst of this invention is used in the form of a mixture of particles, the two components of the mixture will be physically independent. Accordingly, a process using catalysts in this form affords substantial flexibility in catalyst composition within the limits noted hereinabove. Thus, in changing type of charge stocks such as between paraffinic and naphthenic stocks, the catalyst composition can be adjusted with respect to activity and/or selectivity for optimum performance in accordance with this invention by adding or withdrawing one or the other of the catalyst components.

It is also within the purview of this invention to select the refractory support most suitable for use with the metal deposited thereon. The separate particles making up the present catalyst afford flexibility in choice of refractory support, such as the type of alumina employed. Thus, in one embodiment it is contemplated that iridium is desirably deposited on the more acidic eta form of alumina with platinum being deposited on the gamma form of alumina. Such catalyst would have the advantage of reducing the amount of light hydrocarbons, such as methane and ethane to yield a stream of hydrogen of enhanced purity, suitable for recycle or other use.

The following examples will illustrate the catalyst and process of the present invention.

### Example 1

Gamma alumina (25 grams), in the form of spheres was ballmilled and the resulting powder elutriated with methanol to separate out those particles having a dimension in the approximate range of 1 to 5 microns.

A 25 gram sample of the resulting powder was impregnated by contacting with 37.5 ml of an aqueous solution containing 0.15 gram of platinum present as hexachloroplatinic acid. The slurry of alumina in platinum-containing solution was maintained for about 1 hour, thereafter the water was driven off and the resulting product dried overnight at 110°C and then calcined for 4 hours at 250°C to provide a material containing 0.6 weight percent of platinum and 0.65 weight percent of chlorine.

A second 25 gram sample of the above alumina powder was impregnated by contacting with 37.5 ml of an aqueous solution containing 0.15 gram of iridium present as iridium chloride. The slurry of alumina in iridium-containing solution was maintained for about 1 hour, thereafter water was driven off and the resulting product dried at 110°C and then calcined for 4 hours at 250°C to provide a material containing 0.6 weight percent of iridium and 0.33 weight percent of chlorine.

The two batches of impregnated alumina particles were then mixed in a high speed blender to yield a catalyst having an overall composition of 0.3 weight percent platinum, 0.3 weight percent iridium and 0.49 weight percent chlorine.

### Example 2

The catalyst of Example 1 was tested for reforming utilizing a charge constituting a light naphtha having the following properties:

*Properties*

| | |
|---|---|
| Gravity, °API | 63.4 |
| Specific Gravity | 0.7271 |
| Molecular Weight | 102.7 |
| Sulphur, ppm | 0.3 |
| Chlorine, ppm | 1 |
| Arsenic, ppb | 5 |

*ASTM Distillation, °C*

| | |
|---|---|
| IBP | 72 |
| 5% vol | 86 |
| 10% vol | 90 |
| 20% vol | 94 |
| 30% vol | 101 |
| 40% vol | 107 |
| 50% vol | 114 |
| 60% vol | 122 |
| 70% vol | 129 |
| 80% vol | 137 |
| 90% vol | 146 |
| 95% vol | 151 |
| EP | 162 |

*Composition, Wt. %*

| | |
|---|---|
| Paraffins | 69.8 |
| Olefins | 0.4 |
| Naphthenes | 18.3 |
| Aromatics | 11.5 |

Reforming of the above charge was accomplished in an adiabatic three reactor system at an inlet temperature of 504°C, a pressure of 1428 KPa, using a weight hourly space velocity of 2.5, a recycle mole ratio of hydrogen to charge of 5 and a $H_2O/HCl$ ratio of 20 added during the run to halogenate the alumina. The chloride level of the catalyst was adjusted by adding 0.2 weight percent of chlorine in the form of tertiary butyl chloride during the first two days of reforming operation.

The results obtained are shown graphically in the attached figure where inlet temperature necessary to obtain a product having an octane number of 98 $C_5^+$ R + O is plotted against time on stream. Comparative results obtained using the catalyst of this invention with results obtained under identical reaction conditions employing a catalyst of the same platinum and iridium content, but having highly dispersed polymetallic clusters of platinum and iridium on a single support of alumina, designated commercially as "KX8130" and prepared according to U.S. Patent No. 3,953,368 are set forth. From the attached figure, it is seen that the catalyst of the invention had a very enhanced stability as shown by its ability to maintain a high activity over an extended period of time.

It is thus evident and surprising in view of the disclosure of U.S. Patent No. 3,953,368 that the catalyst described herein is much more active and stable than the above commerical catalyst in which platinum and iridium are present on a refractory support as bimetallic clusters.

Accordingly, a reformer containing the present catalyst can process more naphtha or convert the same amount of naphtha to a higher octane quality product, than the aforenoted reforming catalyst in which platinum and iridium are present as bimetallic clusters.

## Claims

1. A catalyst composition comprising a mixture of a minor proportion of platinum on a refractory support and a minor proportion of iridium on a separate refractory support, iridium being the sole metal component on the separate refractory support, said catalyst further comprising from 0.1 to 5 weight percent of halogen.

2. The catalyst composition of claim 1 wherein the support is an inorganic oxide.

3. The catalyst composition of claim 1 or 2 wherein the support is alumina.

4. The catalyst composition of any of claims 1 to 3 comprising a refractory support, from 0.1 to 2 percent by weight of platinum and from 0.1 to 2 percent by weight of iridium.

5. The catalyst composition according to any preceding claim wherein the platinum and iridium are contained on separate particles of the support with the relative weight ratio of the particles containing platinum to those containing iridium being between 10:1 and 1:10.

6. This catalyst composition of any preceding claim wherein the halogen is chlorine.

7. The catalyst composition of any preceding claim wherein the size of the particles is between .01 and 3000 microns.

8. The catalyst composition of claim 7 wherein the size of the particles is between 1 and 100 microns.

9. The catalyst composition of any preceding claim wherein platinum is deposited on a support of gamma alumina and iridium is deposited on a support of eta alumina.

10. The catalyst composition of any preceding claim wherein platinum is the sole metal component on the first-mentioned refractory support.

11. A process for reforming a hydrocarbon charge which comprises contacting the hydrocarbon charge under reforming conditions with a catalyst composition in accordance with any of claims 1 to 10.

12. The process of claim 11 wherein the hydrocarbon charge is a petroleum naphtha.

## Revendications

1. Une composition catalytique comprenant un mélange d'une faible proportion de platine sur un support réfractaire et d'une faible proportion d'iridium sur un support réfractaire séparé, l'iridium étant le seul composant métallique sur le support réfractaire séparé, ledit catalyseur comprenant en outre de 0,1 à 5 % en poids d'halogène.

2. La composition catalytique de la revendication 1, dans laquelle le support est un oxyde inorganique.

3. La composition catalytique de la revendication 1 ou 2, dans laquelle support est l'alumine.

4. La composition catalytique de l'une quelconque des revendications 1 à 3 comprenant un support réfractaire, de 0,1 à 2 % en poids de platine et de 0,1 à 2 % en poids d'iridium.

5. La composition catalytique selon l'une quelconque des revendications précédentes dans laquelle le platine et l'iridium sont contenus sur des particules séparées du support, le rapport pondéral relatif des particules contenant le platine à celles contenant l'iridium étant compris entre 10:1 et 1:10.

6. La compositon catalytique de l'une quelconque des revendications précédentes dans laquelle l'halogène est le chlore.

7. La composition catalytique de l'une des revendications précédentes dans laquelle la dimension des particules est comprise entre 0,01 et 3000 microns.

8. La composition catalytique de la revendications 7 dans laquelle la dimension des particules est comprise entre 1 et 100 microns.

9. La composition catalytique de l'une des revendications précédentes dans laquelle le platine est déposé sur un support d'alumine gamma et l'iridium est déposé sur un support d'alumine êta.

10. La composition catalytique de l'une quelconque des revendications précédentes dans laquelle le platine est le seul composant métallique sur le premier support réfractaire mentionné.

11. Un procédé pour le reformage d'une charge d'hydrocarbure qui consiste à mettre en contact la charge d'hydrocarbure dans des conditions de reformage avec une composition catalytique selon l'une quelconque des revendications 1 à 10.

12. Le procédé de la revendication 11 dans lequel la charge d'hydrocarbure est une essence lourde de pétrole.

## Patentansprüche

1. Katalysatorgemisch, gekennzeichnet durch ein Gemisch eines geringeren Anteils Platin auf einem hitzebeständigen Träger und eines geringeren Anteils Iridium auf einem gesonderten hitzebeständigen Träger, wobei Iridium die einzige Metallkomponente auf dem gesonderten hitzebeständigen Träger ist und der Katalysator weiterhin 0,1 bis 5 Gew.-% Halogen aufweist.

2. Katalysatorgemisch nach Anspruch 1, dadurch gekennzeichnet, daß der Träger ein anorganisches Oxid ist.

3. Katalysatorgemisch nach Anspruch 1 oder 2, dadurch gekennzeichnet, daß der Träger Aluminiumoxid ist.

4. Katalysatorgemisch nach den Ansprüchen 1 bis 3, gekennzeichnet durch einen hitzebeständigen Träger, 0,1 bis 2 Gew.-% Platin und 0,1 bis 2 Gew.-% Iridium.

5. Katalysatorgemisch nach den vorhergehenden Ansprüchen, dadurch gekennzeichnet, daß das Platin und Iridium auf gesonderten Teilchen des Trägers enthalten sind, wobei das relative Gewichtsverhältnis der Teilchen, die Platin enthalten, zu denjenigen, die Iridium enthalten, zwischen 10:1 und 1:10 liegt.

6. Katalysatorgemisch nach den vorhergehenden Ansprüchen, dadurch gekennzeichnet, daß das Halogen Chlor ist.

7. Katalysatorgemisch nach den vorhergehenden Ansprüchen dadurch gekennzeichnet, daß die Teilchengröße zwischen 0,01 und 3000 $\mu$m liegt.

8. Katalysatorgemisch nach Anspruch 7, dadurch gekennzeichnet, daß die Teilchengröße zwischen 1 und 100 $\mu$m liegt.

9. Katalysatorgemisch nach den vorhergehenden Ansprüchen, dadurch gekennzeichnet, daß Platin auf einem Träger aus gamma-Aluminiumoxid und Iridium auf einem Träger aus eta-Aluminiumoxid niedergeschlagen ist.

10. Katalysatorgemisch nach den vorhergehenden Ansprüchen, dadurch gekennzeichnet, daß Platin die einzige Metallkomponente auf dem zuerstgenannten hitzebeständigen Träger ist.

11. Verfahren zum Reformieren eines Kohlenwasserstoff-Einsatzmaterials, dadurch gekennzeichnet, daß man das Kohlenwasserstoff-Einsatzmaterial unter Reformierbedingungen mit einem Katalysatorgemisch gemäß den Ansprüchen 1 bis 10 in Berührung bringt.

12. Verfahren nach Anspruch 11, dadurch gekennzeichnet, daß das Kohlenwasserstoff-Einsatzmaterial ein Rohöl-Naphthaprodukt ist.

AGING COMPARISON AT 98 R+O

KX-130

Catalyst of Example 1

Days on Stream

Temperature °F/C

538 1000

527 980

516 960

504 940

494 920

0   10   20   30   40   50   60   70   80

0 009 309